# EUROPÄISCHE PATENTANMELDUNG

(11) **EP 1 010 665 A1**
(43) Veröffentlichungstag der Anmeldung: **21.06.2000**
(21) Anmeldenummer: 99123467.5
(22) Anmeldetag: 25.11.1999
(51) Int. Cl.: C01B 21/06, C09C 1/00, C08K 3/28, C09D 7/12

(54) **Tantal(V)-nitrid-Pigment, Verfahren zu seiner Herstellung und seine Verwendung**

(30) Priorität: 17.12.1998 DE 19858255
(71) Anmelder: dmc2 Degussa Metals Catalysts Cerdec AG, 60287 Frankfurt am Main (DE)
(72) Erfinder: Letschert, Hans-Peter, Dr., 63450 Hanau (DE); Voigt, Wilfried, 63517 Rodenbach (DE)

(57) **Zusammenfassung**

Die Erfindung richtet sich auf Tantal(V)-nitrid-Pigmente mit gegenüber vorbekannten Produkten verbesserten Farbwerten, ein Verfahren zur Herstellung solcher Pigmente und deren Verwendung.

Erfindungsgemäße Pigmente mit einem a*-Farbwert im CIE-Lab-System von gleich/größer 45, insbesondere gleich/größer 50, sind erhältlich durch Nachbehandlung eines in bekannter Weise hergestellten Tantel(V)-nitrids in einer Salzschmelze bei 100 bis 600 °C, insbesondere 300 bis 500 °C, innerhalb von 1 bis 100 Minuten, insbesondere 5 bis 60 Minuten. Bevorzugt wird die Nachbehandlung in einer Alkalimetallnitrat-Schmelze durchgeführt. Die Pigmente lassen sich zur Einfärbung von Kunststoffen und Lacken sowie Email-, Glas- und Porzellandekoren verwenden.

## Beschreibung

Die Erfindung betrifft ein Verfahren zur Herstellung von Tantal(V)-nitrid-Pigmenten, die sich gegenüber vorbekannten Tantal(V)-nitrid-Pigmenten durch einen höheren a*-Farbwert im CIE-Lab-System auszeichnen. Die Erfindung richtet sich ferner auf Tantal(V)-Pigmente mit einem a*-Farbwert nach CIE-Lab von gleich/größer +45; derartige Pigmente sind durch das erfindungsgemäße Verfahren erhältlich. Ein weiterer Anmeldegegenstand richtet sich auf die Verwendung der Pigmente.

Es besteht ein Bedarf, bekannte Pigmente, welche im Gebrauch oder bei der Entsorgung, etwa bei der Müllverbrennung, toxische oder ökologisch bedenkliche Schwermetalle freisetzen können, durch solche Pigmente zu ersetzen, welche unbedenklich sind. Ein solches unbedenkliches Pigment ist Tantal(V)-nitrid, dessen Farbe rot-orange bis rot ist. Die nach bekannten Verfahren erhältlichen Tantal(V)-nitride weisen einen zu geringen a*-Farbwert im CIE-Lab-System auf (DIN 5033, Teil 3) und wirken zudem etwas gräulich oder bräunlich. Tantal(V)-nitrid läßt sich gemäß H. Moureau und C.H. Hamplet (J. Amer. Chem. Soc. 59, 33-40 (1937)) durch Ammonolyse von TaCl₅ herstellen; die Reaktionszeiten sind sehr lang und zudem wird kein coloristisch ansprechendes Produkt erhalten. Gemäß G. Brauer und J.R. Weidlein (Angew. Chem. 77, 218-219 (1965)) läßt sich Tantal(V)-oxid bei 860 bis 920 °C mit Ammoniak nitridieren. Bei der Nacharbeitung des zuvor genannten Verfahrens durch die Erfinder der vorliegenden Anmeldung wurde festgestellt, daß trotz Verlängerung der Reaktionszeit keine weitere Farbverschiebung von rotbraun nach rot stattfindet, so daß auch dieses Produkt coloristisch wenig attraktiv ist.

Nach dem in der DE-OS 42 34 938 beschriebenen Verfahren läßt sich Tantal(V)-nitrid durch Nitridierung eines Tantal(V)-oxidhydrats bei 750 bis 950 °C und verkürzter Reaktionsdauer gewinnen. Die nach diesem Verfahren erhältlichen a*-Farbwerte lagen unter Zugrundelegung der in diesem Dokument beschriebene Testmethode um +40. Durch thermische Behandlung des Ta₃N₅ bei 300 °C konnte der a*-Farbwert nur um 2-3 Einheiten erhöht werden. Aus coloristischer Sicht wird dagegen ein möglichst hoher a*-Farbwert angestrebt, insbesondere ein Wert über 45 und besonders bevorzugt über 50.

Aufgabe der vorliegenden Erfindung ist demgemäß, Tantal(V)-nitrid-Pigmente mit einem a*-Farbwert nach CIE-Lab (DIN 5033, Teil 3), gemessen an einem 10 Minuten bei 140 °C gelierten PVC-Film mit einem Pigmentgehalt von 26 Gew.-%, bereitzustellen. Eine weitere Aufgabe richtet sich darauf, ein Verfahren zur Herstellung derartiger Pigmente bereitzustellen. Eine weitere Aufgabe besteht darin, das bekannte Verfahren zur Herstellung von Tantal(V)-nitriden durch Nitridierung eines Tantal(V)-oxids, Tantal(V)-oxidhydrats oder Tantal(V)-oxidnitrids mit Ammoniak dahingehend zu verbessern, daß das resultierende Pigment einen höheren a*-Farbwert aufweist.

Es wurde gefunden, daß sich der a*-Farbwert sowie die Farbintensität (Chroma-Wert) durch eine Behandlung des Tantal(V)-nitrids in einer Salzschmelze in überraschender Weise erhöhen lassen. Damit nimmt die Pigmentqualität des Tantal(V)-nitrids in nicht vorhersehbarer Weise zu.

Gegenstand der Erfindung ist demgemäß ein Verfahren zur Herstellung eines Tantal(V)-nitrid-Pigments, umfassend Nitridierung eines Tantal(V)-oxids, Tantal(V)-oxidhydrats oder Tantal(V)-oxidnitrids mit Ammoniak bei 500 bis 1100 °C in Gegenwart oder Abwesenheit eines Flußmittels, das dadurch gekennzeichnet ist, daß man die Nitridierung entweder in Gegenwart eines oder mehrerer wasserlöslicher Salze aus der Reihe der Alkali- und Erdalkalimetallnitrate, -chloride und -carbonate durchführt oder/und daß man das Nitridierungsprodukt vor oder nach dem Auswaschen gegebenenfalls anwesender Flußmittel in einer Salzschmelze mit einem Schmelzpunkt im Bereich von 100 bis 600 °C 1 bis 100 Minuten bei 100 bis 600 °C behandelt und anschließend das Pigment durch Auflösen der Salze in Wasser gewinnt. Die abhängigen Verfahrensansprüche richten sich auf bevorzugte Ausführungsformen des erfindungsgemäßen Verfahrens.

Ein weiterer Gegenstand der Erfindung ist Tantal(V)-nitrid-Pigment mit einem a*-Farbwert von gleich/größer als +45, definiert im CIE-Lab-System nach DIN 5033, Teil 3 und gemessen an einem 10 Minuten bei 140 °C gelierten PVC-Film mit einem Gehalt von 26 Gew.-% Pigment. Die erfindungsgemäßen Pigmente sind erhältlich durch das erfindungsgemäße Verfahren.

Die Nitridierung eines Tantal(V)-oxids, -oxidhydrats, oder -oxidnitrids kann in an sich bekannter Weise erfolgen, indem Ammoniak bei 500 bis 1100 °C, vorzugsweise 750 bis etwa 1000 °C, mehrere Stunden über die Tantal-Verbindung geleitet wird. Zweckmäßigerweise läßt sich die Nitridierung in einem Drehrohr oder in einer anderen Vorrichtung, womit das zu nitridierende Reaktionsgemisch zwecks Freilegung neuer Partikeloberflächen bewegt wird, durchführen. Die Nitridierung kann in Gegenwart oder Abwesenheit eines oder mehrerer Flußmittel, beispielsweise Borsäure, Borsäureanhydrid und/oder Ammoniumsalzen der Borsäuren, Kohlensäure oder niederen Carbonsäuren gemäß DE-OS 42 34 938 erfolgen. In Gegenwart derartiger Flußmittel hergestellte Tantal(V)-nitride weisen zwar eine höhere Farbintensität auf als solche, welche in Abwesenheit derartiger Flußmittel erzeugt werden, jedoch wird durch die erfindungsgemäße Nachbehandlung des Nitridierungsproduktes in einer Salzschmelze eine wesentlich höhere Farbintensität erzielt. Es wurde ferner festgestellt, daß die Nitridierung bei höherer Temperatur durchführbar ist als im Hinblick auf die begrenzte Temperaturstabilität von Tantal(V)-nitrid bisher angenommen wurde, sofern die Umsetzung in Gegenwart einer ausreichenden Menge Ammoniak folgt. Durch eine so möglich gewordene Temperaturerhöhung läßt sich die Reaktionszeit reduzieren und die Raum-Zeit-Ausbeute erhöhen. Bezüglich der Einzelheiten der Nitridierung wird auf die zuvor genannte Literatur verwiesen.

Gemäß einer Ausführungsform wird die Nitridierung in Gegenwart eines oder mehrerer wasserlöslicher Salze aus der Reihe der Alkali- und Erdalkalimetall-nitrate, -chloride und -carbonate, insbesondere Alkalimetallnitrate, durchgeführt. Derartige Salze können in einer Menge von mindestens 0,1 Gew.-%, bezogen auf die zu nitridierende Tantalverbindung, bis zu einem Vielfachen der Tantalverbindung eingesetzt werden. Geringe Menge derartiger Salze wirken in ähnlicher Weise wie vorbekannte Flußmittel. Mit zunehmender Menge dieser Salze wird das gesamte Reaktionsgemisch pastös bis flüssig, so daß der Aggregatzustand des Gemischs bei der Nitridierung berücksichtigt werden muß. Zweckmäßigerweise erfolgt im letztgenannten Fall die Nitridierung in einer solchen Menge einer Salzschmelze, daß die Viskosität der Schmelze, in welcher die zu nitridierende Tantalverbindung suspendiert ist, einen ausreichend intensiven Kontakt zwischen der festen Ta-Phase und der Gasphase (Ammoniak) ermöglicht.

Gemäß einer bevorzugten Ausführungsform wird die Nitridierung in an sich bekannter Weise durchgeführt, und an die Nitridierung schließt sich die Nachbehandlung in einer Salzschmelze an. Die Nachbehandlung umfaßt das Eintragen des Nitridierungsproduktes in die Salzschmelze; nach dem Eintrag der Tantalverbindung in die Schmelze wird das Gemisch stehengelassen oder bei Bedarf umgerührt. Die Nachbehandlung kann in sauerstoffhaltiger, vorzugsweise aber in inerter Atmosphäre, zum Beispiel Stickstoff oder bevorzugt Ammoniak, erfolgen. Die zur Qualitätsverbesserung des Tantal(V)-nitrid-Pigments durch Behandlung in der Salzschmelze erforderliche Reaktionszeit liegt bei 1 bis 100 Minuten, vorzugsweise 10 bis 60 Minuten, bei einer Reaktionstemperatur im Bereich von 100 bis 600 °C, vorzugsweise 300 bis 500 °C. Es versteht sich, daß mit zunehmender Reaktionstemperatur die Reaktionsdauer reduziert werden kann. Gemäß einer besonders bevorzugten Ausführungsform des erfindungsgemäßen Verfahrens erfolgt die Behandlung in der Salzschmelze bei einer Temperatur im Bereich von 300 bis 500 °C innerhalb einer Reaktionszeit von 5 bis 60 Minuten, insbesondere 10 bis 30 Minuten.

Die im erfindungsgemäßen Verfahren zur Nachbehandlung des Tantal(V)-nitrids zu verwendende Salzschmelze besteht aus einem oder mehreren Salzen und/oder Metallhydroxiden, wobei der Schmelzpunkt des Salzes oder Salzgemisches im Bereich von 100 bis 600 °C liegt. Vorzugsweise liegt der Schmelzpunkt des Salzes, Hydroxids oder Gemisches derartiger Verbindungen im Bereich von 200 bis 400 °C. Im Hinblick auf eine problemlose Abtrennung des Pigments von den Bestandteilen der Salzschmelze ist es zweckmäßig, daß die Salzschmelze aus solchen Bestandteilen besteht, welche im wesentlichen wasserlöslich sind. Nach beendeter Behandlung des Tantal(V)-nitrids in der Salzschmelze kann somit das Gemisch in Wasser aufgenommen werden, wobei sich die Salze lösen und das unlösliche, in seinen Farbwerten verbessertes Tantal(V)-nitrid-Pigment aus der wäßrigen Phase abgetrennt und anschließend getrocknet werden kann.

Salzschmelzen, wie sie in bevorzugten Ausführungsformen des erfindungsgemäßen Verfahrens zur Anwendung gelangen, bestehen im wesentlichen aus einer oder mehreren Verbindungen aus der Reihe der Alkalimetallnitrate, Erdalkalimetallnitrate, Alkalimetallcarbonate, Alkali- und Erdalkalimetallchloride, Alkalimetallhydroxide und Boroxid. Bei den in diesen Salzen und Hydroxiden zugrundeliegenden Kationen handelt es sich vorzugsweise um Lithium, Natrium, Kalium, Magnesium, Kalzium, Strontium und Barium. Gemäß besonders bevorzugten Ausführungsformen besteht die Salzschmelze aus einem oder mehreren Alkalimetallnitraten oder einem Alkalimetallnitrat in Kombination mit einem Alkalimetallhydroxid. Die im erfindungsgemäßen Verfahren durch Nachbehandlung des Tantal(V)-nitrids in einer Salzschmelze erhältliche Steigerung des a*-Farbwert sowie des Chromawertes hängt außer von der Temperatur und Reaktionsdauer auch von der Auswahl der Komponenten der Salzschmelze ab. Während beispielsweise unter Verwendung einer etwa eutektischen Salzschmelze aus KNO₃/LiNO₃ die größte Qualitätsverbesserung bei einer Reaktionstemperatur um 400 °C erzielt wird, werden unter Verwendung eines Salzgemischs aus NaNO₃/LiNO₃ bereits bei 350 °C optimale Werte erzielt. Unter Verwendung der zuvor genannten optimierten Salzgemische wird die Nachbehandlung vorzugsweise bei einer Temperatur im Bereich von 350 bis 450 °C innerhalb von 10 bis 60 Minuten durchgeführt.

Stark alkalische Schmelzen werden weniger bevorzugt, da hierdurch der a*-Farbenwert nicht oder nur wenig erhöht wird.

Sofern das Tantal(V)-oxidnitrid als Glasfarbe oder Glasemail zur Anwendung gelangen soll, kann anstelle einer Salzschmelze aus wasserlöslichen Salzen auch eine unter 600 °C schmelzende Glaszusammensetzung eingesetzt werden, die Bestandteil des Pigments wird.

Der Tabelle 1 lassen sich einige bevorzugte binäre Salzschmelzen mit ihren Schmelzpunkten sowie Schmelzpunkten der Einzelkomponenten (Werte in Klammer) entnehmen.

**Tabelle 1**

| Salz 1 | Mol-% | Salz 2 | Schmelzpunkt Entektikum (°C) |
|---|---|---|---|
| KNO₃ | 35 | LiNO₃ | 132 |
| NaNO₃ | 50 | LiNO₃ | 208 |
| NaNO₃ | 50 | KNO₃ | 218 |
| Li₂CO₃ | 98 | LiNO₂ | 250 |

Unter Verwendung von Salzschmelzen, welche wasserlösliche Bestandteile enthalten, kommt es bei der erfindungsgemäßen Nachbehandlung von Tantalnitrid zwecks Qualitätsverbesserung praktisch zu keiner Änderung der Teilchengrößenverteilung des eingesetzten Tantalnitrids. Sofern somit das Nitridierungsprodukt bereits eine für Pigmentzwecke geeignete Teilchengrößenverteilung aufweist, ist nach der erfindungsgemäßen Nachbehandlung in der Salzschmelze kein weiterer Mahlprozeß und/oder Siebung erforderlich.

Wie aus den erfindungsgemäßen Beispielen hervorgeht, sind anspruchsgemäße Tantal(V)-nitrid-Pigmente mit einem a*-Farbwert von gleich/größer als 45 und vorzugsweise größer 50, definiert und gemessen wie zuvor ausgeführt, durch das erfindungsgemäße Verfahren, insbesondere durch Nachbehandlung eines Tantalnitrids in einer Salzschmelze leicht erhältlich. Der Mechanismus für die durch die Nachbehandlung ermöglichte Verbesserung der Pigmentqualität ist derzeit noch nicht bekannt. Nach keinem der vorbekannten und von den Erfindern der vorliegenden Anmeldung nachgearbeiteten Verfahren konnte ein Tantal(V)-nitrid-Pigment mit einem a*-Farbwert von gleich/größer 45 erhalten werden. Durch die Erfindung werden somit neue Pigmente mit verbesserten Farbeigenschaften zur Verfügung gestellt.

Die erfindungsgemäß erhältlichen Tantal(V)-nitrid-Pigmente lassen sich zur Einfärbung von Kunststoffen, beispielsweise Extrudaten, Folien und Fasern, zur Einfärbung von Lacken und anderen synthetischen Beschichtungen, ferner zur Einfärbung von Email-, Glas- und Porzellandekoren verwenden. Der Begriff 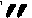 Glasdekore" schließt auch die Einfärbung von Bau- und Hohlglas ein.

Die Vorteile der Erfindung bestehen darin, daß Tantal(V)-nitrid-Pigmente in verbesserter Pigmentqualität zur Verfügung gestellt werden, wodurch das Einsatzspektrum für derartige Pigmente erweitert wird. Die Pigmente sind durch das einfache erfindungsgemäße Verfahren erhältlich. Der Nachbehandlung in der Salzschmelze können auch solche Tantal(V)-nitride zugeführt werden, welche selbst eine unzureichende Pigmentqualität aufweisen, jedoch gegebenenfalls wirtschaftlich zugänglich sind.

Anhand der nachfolgenden Beispiele wird die Erfindung weiter erläutert.

### Beispiele

Herstellung des Ausgangs-Tantal(V)-nitrids (VB): Eingesetzt wurde in den erfindungsgemäßen Beispielen ein Tantal(V)-nitrid, das hergestellt wurde durch Nitridieren von Ta₂O₅ mit einem d₅₀-Wert etwa 0,4 µm und einem d₉₀-Wert etwa 1 µm mit Ammoniak (120 l/h) in einem Drehrohr bei 1000 °C; Reaktionsdauer von 10 Stunden.

Allgemeine Vorschrift zur Nachbehandlung eines Tantal(V)-nitrids in einer Salzschmelze: 100 g Salz, Salzgemisch oder Salz-Hydroxidgemisch werden in der in den Beispielen angegebenen Zusammensetzung im Muffelofen geschmolzen. Nach Eintragung des Ausgangs-Tantal(V)-nitrids (VB 1) in die Schmelze und Umrühren wird das Gemisch bei der in den Beispielen genannten Temperatur T (°C) 20 Minuten belassen. Danach wird der gesamte Tiegel in Wasser ausgekocht, das Produkt abfiltriert und bei 120 °C getrocknet.

### Bestimmung der Farbwerte:

0,7 g Pigment und 2 g PVC-Plastisol werden gemischt und in einer Farbausreibemaschine dispergiert. Mit einem Schlitten werden Pastenaufstriche in einer Dicke von 0,3 mm hergestellt; geliert wird 10 Minuten bei 140 °C. Mit einem Farbmeßgerät (Hunterlab Labscan 5100) werden die Hunter-Lab-Werte vermessen und daraus auch die Buntheit C (Chroma-Wert) und der Bunttonwinkel H ermittelt. Die Meßdaten werden in bekannter Weise in die L*a*b*-Farbwerte des CIE-Lab-Systems nach DIN 5033, Teil 3 umgerechnet.

Der Tabelle 2 sind die Versuchsbedindungen sowie die Farbwerte L*,a*,b* und teilweise der Hunter-Chroma-Wert der Beispiele zu entnehmen. Die Beispiele B 1.2 bis B 1.4 sowie Beispiele B 2.1, B 2.2, B 3.1, B 3.2 und B 4 bis B 6 zeigen eine kräftige Erhöhung des a*-Farbwerts und Steigerung der Brillanz. Die Beispiele B 1.1 sowie B 7 und B 8 führten nicht zu anspruchsgemäßen Produkten; der Chroma-Wert ist nur geringfügig erhöht.

**Tabelle 2**

| Beispiel Nr. | Salze (% Salz 1 / % Salz 2) | Temperatur T (°C) | CIE-Lab-Farbwerte | | | Hunter-Chroma C |
|---|---|---|---|---|---|---|
| | | | L* | a* | b* | |
| VB | - | - | 38,3 | 40,2 | 41,1 | 38,2 |
| B 1.1 | NaNO₃/LiNO₃ (55,2/44,8) | 300 | 37,4 | 40,9 | 44,1 | |
| B 1.2 | " | 350 | 41,4 | 51,7 | 52,2 | 50,8 |
| B 1.3 | " | 400 | 42,5 | 50,9 | 52,8 | 49,9 |
| B 1.4 | " | 450 | 44,1 | 49,3 | 55,7 | |
| B 2.1 | KNO₃/LiNO₃ (44,1/55,9) | 400 | 42,5 | 50,6 | 48,9 | 49,9 |
| B 2.2 | " | 450 | 47,7 | 45,1 | 59,0 | 47,9 |
| B 3.1 | NaNO₃ (100) | 450 | 45,6 | 45,2 | 52,1 | |
| B 3.2 | " | 400 | 43,8 | 46,7 | 55,2 | 47,4 |
| B 4 | KNO₃ (100) | 450 | 41,8 | 48,5 | 52,6 | 48,0 |
| B 5 | LiNO₃ (100) | 450 | 47,3 | 47,6 | 54,2 | 50,0 |
| B 6 | B₂O₃ (100) | 450 | 40,7 | 48,2 | 52,7 | |
| B 7 | NaNO₃/KOH (42/58) | 300 | 43,8 | 39,4 | 47,9 | 40,3 |
| B 8 | NaOH/KOH (42/58) | 350 | 44,3 | 39,4 | 47,2 | 40,4 |

## Patentansprüche

1. Verfahren zur Herstellung eines Tantal(V)-nitrid-Pigments, umfassend Nitridierung eines Tantal(V)-oxids, Tantal(V)-oxidhydrats oder Tantal(V)-oxidnitrids mit Ammoniak bei 500 bis 1100 °C in Gegenwart oder Abwesenheit eines Flußmittels,
dadurch gekennzeichnet,
daß man die Nitridierung entweder in Gegenwart eines oder mehrerer wasserlöslicher Salze aus der Reihe der Alkali- und Erdalkalimetallnitrate, -chloride und -carbonate durchführt oder/und, daß man das Nitridierungsprodukt vor oder nach dem Auswaschen gegebenenfalls anwesender Flußmittel in einer Salzschmelze mit einem Schmelzpunkt im Bereich von 100 bis 600 °C 1 bis 100 Minuten bei 100 bis 600 °C behandelt und anschließend das Pigment durch Auflösen der Salze in Wasser gewinnt.

2. Verfahren nach Anspruch 1,
dadurch gekennzeichnet,
daß man das Reaktionsprodukt der Nitridierung in einer Salzschmelze behandelt, wobei die Salzschmelze ein oder mehrere Verbindungen aus der Reihe wasserlöslicher und unter Schmelzbedingungen stabiler Alkali-, Erdalkali- und Erdmetallsalze und/oder Alkalimetallhydroxide enthält.

3. Verfahren nach Anspruch 1 oder 2,
dadurch gekennzeichnet,
daß die Salzschmelze im wesentlichen aus einer oder mehreren Verbindungen aus der Reihe der Alkalimetallnitrate, Erdalkalimetallnitrate, Alkalimetallcarbonate, Alkali- und Erdalkalimetallchloride, Alkalimetallhydroxide und Boroxid besteht.

4. Verfahren nach einem der Ansprüche 1 bis 3,
dadurch gekennzeichnet,
daß man die Behandlung in der Salzschmelze bei einer Temperatur im Bereich von 300 bis 500 °C innerhalb von 5 bis 60 Minuten, insbesondere 10 bis 30 Minuten, durchführt.

5. Verfahren nach einem der Ansprüche 1 bis 4,
dadurch gekennzeichnet,
daß man Tantal(V)-oxid oder -oxidhydrat nitridiert und das Nitridierungsprodukt in einer Salzschmelze aus einem oder mehreren Alkalimetallnitraten bei 350 bis 450 °C innerhalb von 10 bis 60 Minuten behandelt.

6. Tantal(V)-nitrid-Pigment mit einem a*-Farbwert von gleich/größer als +45, definiert im CIE-Lab-System nach DIN 5033, Teil 3 und gemessen an einem 10 Minuten bei 140 °C gelierten PVC-Film mit einem Gehalt von 26 Gew.-% Pigment.

7. Verwendung eines Tantal(V)-nitrids gemäß Anspruch 6 zur Einfärbung von Kunststoffen, Lacken, Email-, Glas- und Porzellandekoren.
